# EUROPÄISCHE PATENTSCHRIFT

(11) **EP 1 558 507 B1**
(45) Veröffentlichungstag und Bekanntmachung des Hinweises auf die Patenterteilung: **18.10.2006**
(21) Anmeldenummer: 03809710.1
(22) Anmeldetag: 23.04.2003
(51) Int. Cl.: B65G 19/22, B65G 19/24

(54) **MITNEHMER FÜR KETTENKRATZFÖRDERER, INSBESONDERE DES UNTERTAGEBETRIEBES**
DRIVER FOR SCRAPER CHAIN CONVEYORS, PARTICULARLY FOR USE IN UNDERGROUND WORKING
ENTRAINEUR POUR CONVOYEUR A CHAINE A RACLETTES, NOTAMMENT D'EXPLOITATION AU FOND

(30) Priorität: 28.10.2002 DE 10250161
(43) Veröffentlichungstag der Anmeldung: 03.08.2005
(73) Patentinhaber: K.B.P. Kettenwerk Becker-Prünte GmbH, D-45711 Datteln (DE)
(72) Erfinder: MALITZKI, Hans-Jürgen, 44581 Castrop-Rauxel (DE); DOBEK, Richard, 58644 Iserlohn (DE)
(74) Vertreter: GROSSE BOCKHORNI SCHUMACHER
(86) Internationale Anmeldenummer: PCT/EP2003/004218
(87) Internationale Veröffentlichungsnummer: WO 2004/039702

(56) Entgegenhaltungen:
- DE-A- 10 040 186
- DE-U- 29 709 717

## Beschreibung

Die Erfindung betrifft einen Mitnehmer für Kettenkratzförderer, insbesondere solche des Untertagebetriebes und zwar insbesondere solche gemäß Oberbegriff des Patentanspruches 1.

Derartige Mitnehmer für den Untertagebetrieb werden üblicherweise zweigeteilt aus einem Ober- und Unterteil ausgeführt, wobei Ober- und Unterteil miteinander durch Durchsteckschrauben verbunden, insbesondere verspannt sind und hierdurch innerhalb der Teilungsebene zwischen Oberteil und Unterteil angeordnete Kettenstränge gehalten sind. Hierzu sind in jedem Mitnehmer Kettenbetten für die Kettenglieder vorgesehen.

Derartige Mitnehmer sind beispielsweise aus der DE-A-27 17 449 bekannt. Die Teilungsebene zwischen Ober- und Unterteil ist hierbei so geführt, daß das Unterteil mit seinen beiden Enden, die als Führungsglieder in die seitlichen Führungsprofile des Rinnenförderers eingreifen, das Oberteil umschließt. Diese Bauweise der Mitnehmer hat sich im Laufe der Zeit durchgesetzt, weil sie sich mit Blickpunkt auf eine erhöhte Verschleißfestigkeit als zweckmäßig herausgestellt hat.

Bei diesen Mitnehmern kann jedoch bei Einleitung entsprechend hoher Kräfte, beispielsweise in Folge von Zwängungen innerhalb der Führungsprofile, eine Ausbauchung bzw. Verwölbung auftreten, was zu einem Verwerfen, insbesondere zu einem Absprengen des Oberteils infolge Durchscherung der Durchsteckverbindungen führen kann. Dieses Problem tritt insbesondere nach dem Austreten aus Kettenrädern mit entsprechend heute üblichen, hohen Durchmessern auf, wenn die Kettenstränge mit den aufmontierten Kratzern zur Überbrückung der Höhendifferenz zwischen Kettenrad und Fördererrinne durch die im Maschinenrahmen angeordneten Führungsleisten bogenförmig umgelenkt und unter starkem Winkel nach unten bis zum Eingleiten in das Rinnenprofil zwangsgeführt werden, wobei die Kratzer die notwendige Anpresskraft über die Klobenenden aufnehmen.

Schließlich sind Mitnehmer bekannt (DE 100 40 186 A1), bei denen das Oberteil brückenartig ausgebildet ist und klammerartig das Unterteil übergreift. Die Enden des Unterteils sind mit Zentriernasen ausgebildet, die in komplementär ausgebildete Ausnehmungen an den Enden des Oberteils eingreifen. Im Bereich des Kettenbettes sind Zentrierhöcker vorgesehen, die in entsprechende komplementäre Ausnehmungen des Gegenteils eingreifen. Dadurch ergibt sich ein sehr stabiler Aufbau und ein guter Halt zwischen Oberteil und Unterteil, die durch Schraubverbindungen gesichert sind. Diese Schraubverbindungen sind insbesondere in den beiden Endbereichen von Oberteil und Unterteil vorgesehen. Trotz des Zentriereingriffs im Bereich der Enden von Oberteil und Untereil und des Zentriereingriffs im Bereich der Kettenbetten kann allerdings ein Krummziehen des Mitnehmers unter hohen Lasten nicht sicher ausgeschlossen werden, so dass es zu einem Aufwölben der beiden Endbereiche des Mitnehmers kommen kann mit der Folge, dass die Enden des Mitnehmers nicht mehr einwandfrei in den Rinnen der Führungsprofile geführt werden. Hierbei ist zu bedenken, dass die Mitnehmer einen geringen Spielraum in den seitlichen Rinnenprofilen der Führungsprofile haben, der etwa 1 bis 3 mm beträgt, so dass es bei Verspannungen der Mitnehmer während des Transports der Mitnehmer über die Rundstahlkette zu Zwängungen innerhalb der Führungsprofile kommen kann.

Aufgabe der Erfindung ist es, einen Mitnehmer auszubilden, der auch bei Auftreten von Zwängungen unter hohen Lasten stabil ist und bei dem Deformationen und ein Absprengen des Oberteils vom Unterteil verhindert werden. Gleichwohl soll eine einfache Montage ermöglicht sein.

Diese Aufgabe wird erfindungsgemäß durch die im kennzeichnenden Teil des Anspruches 1 enthaltenen Merkmale gelöst, wobei zweckmäßige Weiterbildungen der Erfindung durch die in den Unteransprüchen enthaltenen Merkmale gekennzeichnet sind.

Nach Maßgabe der Erfindung sind zwischen Oberteil und Unterteil definierte Stützflächen vorgesehen, über die das Oberteil und Unterteil in Kontakt gelangen und die eine Freistellung zwischen Oberteil und Unterteil mindestens im Bereich der Schraubverbindungen bewerkstelligen. Dadurch sichern die Schraubenverbindungen auf diesen Stützflächen. Auch unter hohen Lasten wird dadurch verhindert, dass die seitlichen Enden des Oberteils beim Verspannen der Schrauben im Bereich der Zentriernasen nach oben gedrückt werden, so dass ein Aufwölben des Mitnehmers zuverlässig ausgeschlossen ist. Dadurch ist gewährleistet, dass auch unter hohen Lasten keine Zwängungen innerhalb der Führungsprofile auftreten und damit eine einwandfreie Förderung gewährleistet wird. Dadurch wird der Vorteil des klammerartigen Übergreifens des Oberteils über das Unterteil im Verbund mit dem Zentriereingriff verstärkt und ein Aufbiegen bzw. synergistisch eine Deformation des Mitnehmers ausgeschlossen. Hierbei wirken die Stützflächen mit den Zentriereingriffen durch die Zentriernasen und Zentrierhöcker zusammen und ein Absprengen von Teilen des Mitnehmers infolge auftretender Deformationen wird ausgeschlossen. Infolge der Freistellung wird eine saubere und definierte Kraftübertragung zwischen Ober- und Unterteil über die Stützflächen erreicht und es wird eine positive Kraft beim Anziehen der Schraubenverbindungen eingeleitet, wobei der Freiraum insbesondere wie ein Klemmspalt wirkt und damit einem Aufbiegen der Enden des Mitnehmers entgegengewirkt wird.

Hierbei ist es zweckmäßig, wenn die Stützflächen durch Vorsprünge am Oberteil und/Unterteil gebildet sind, die einen spaltartigen Freiraum zwischen Oberteil und Unterteil mindestens im Bereich der Schraubverbindungen bilden. Alternativ zur Ausbildung von Vorsprüngen kann der Freiraum auch durch eine entsprechende Einsenkung im Oberteil und/oder Unterteil erzeugt werden. Zweckmäßigerweise sind die Vorsprünge, die vorzugsweise schulterartig ausgebildet sind, an den beiden seitlichen Endbereichen des Oberteils und Unterteils vorgesehen.

Des weiteren ist es zweckmäßig, dass Zentrierhöcker bzw. Zentriernasen im Bereich der Kettenbetten vorgesehen sind, die in komplementäre Ausnehmungen des Gegenteils eintauchen. Werden die Zentriernasen höher ausgeführt, so dass sie in Anlage mit der Bodenfläche der Zentrierausnehmung gelangen, dann wird hierdurch ein Freiraum gebildet. Insbesondere kann hierbei sicher gestellt werden, dass die beiden Kettenschenkel beim Verspannen der außenliegenden Schraubverbindungen frei bleiben, also lose sind. Hierbei erfolgt die Abstützung zwischen Oberteil und Unterteil im Bereich der Stützflächen und zwischen Zentriernase und Bodenfläche der komplementären Zentrieraussparung. Über die schulterartigen Vorsprünge und die im Bereich der Kettenbetten oder zwischen den Kettenbetten vorgesehenen Zentrierhöcker kann eine gewünschte Freistellung der Kettenschenkel erfolgen, wobei je nach Ausbildung der Schulter oder der Zentrierhöcker eine Freistellung der ,äußeren oder inneren Kettenschenkel bezüglich Oberteil und Unterteil erfolgen kann. Aufgrund der erfindungsgemäßen Maßnahmen sind die Enden der Mitnehmer in allen Richtungen festgelegt und damit gesperrt, so dass keine Deformationen auch unter hohen Lasten auftreten können. Das Unterteil, welches vom Oberteil klammerartig übergriffen wird, verhält sich quasi wie ein beidseitig eingespannter Balken.

Nachfolgend werden Ausführungsbeispiele der Erfindung anhand der Zeichnung beschrieben. Darin zeigen
- Fig. 1: eine Ansicht eines aus einem Oberteil und einem Unterteil gebildeten Mitnehmers in Ansicht von unten her,
- Fig. 2: eine teilweise geschnittenen Ansicht des Mitnehmers nach Fig. 1,
- Fig. 3: eine Schnittansicht des Mitnehmers gemäß Linie A-A nach Fig. 2,
- Fig. 4: eine Schnittansicht längs der Linie A'-A' von Fig. 2,
- Fig. 5: eine weitere alternative Ausgestaltung eines Mitnehmers, wiederum in Ansicht von der Unterseite her,
- Fig. 6: eine Seitenansicht des in Fig. 5 dargestellten Mitnehmers, teilweise im Schnitt,

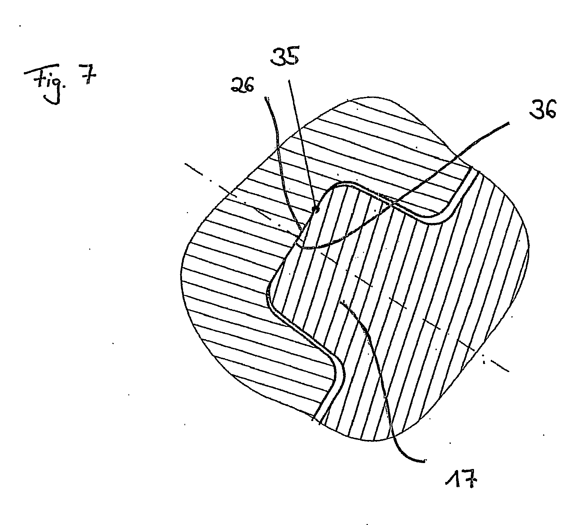

- Fig. 7: eine Schnittansicht längs der Linie A-A von Fig. 6,
- Fig. 8: eine Ansicht einer weiteren alternativen Ausführungsform eines Mitnehmers, wiederum gesehen von der Unterseite her,
- Fig. 9: eine Seitenansicht des in Fig. 8 dargestellten Mitnehmers, teilweise im Schnitt,
- Fig. 10: eine Schnittansicht längs der Linie A-A von Fig. 9,
- Fig. 11: eine Schnittansicht längs der Linie B-B von Fig. 9,
- Fig. 12: eine Ansicht einer weiteren alternativen Ausführungsform eines Mitnehmers, gesehen von der Unterseite her,
- Fig. 13: eine Seitenansicht des in Fig. 12 dargestellten Mitnehmers, wiederum teilweise im Schnitt,
- Fig. 14: eine Schnittansicht längs der Linie A-A von Fig. 13,
- Fig. 15: eine Schnittansicht längs der Linie B-B von Fig. 13,
- Fig. 16: eine Schnittansicht längs der Linie C-C von Fig. 13,
- Fig. 17: eine Teilansicht einer weiteren Ausführungsform eines Mitnehmers im Schnitt,
- Fig. 18: eine weitere Ausführungsform eines Mitnehmers in Teilansicht und im Schnitt,
- Fig. 19: eine Teilansicht einer weiteren Ausführungsform eines Mitnehmers im Schnitt,
- Fig. 20: eine Teilansicht einer weiteren Ausführungsform eines Mitnehmers im Schnitt,
- Fig. 21: eine Teilansicht einer weiteren Ausführungsform im Schnitt sowie
- Fig. 22: eine Teilansicht einer weiteren Ausführungsform eines Mitnehmers im Schnitt sowie
- Fig. 23: eine Ansicht eines konventionellen Mitnehmers eines Kettenkratzförderers mit oberen und unteren seitlichen Führungsprofilen.

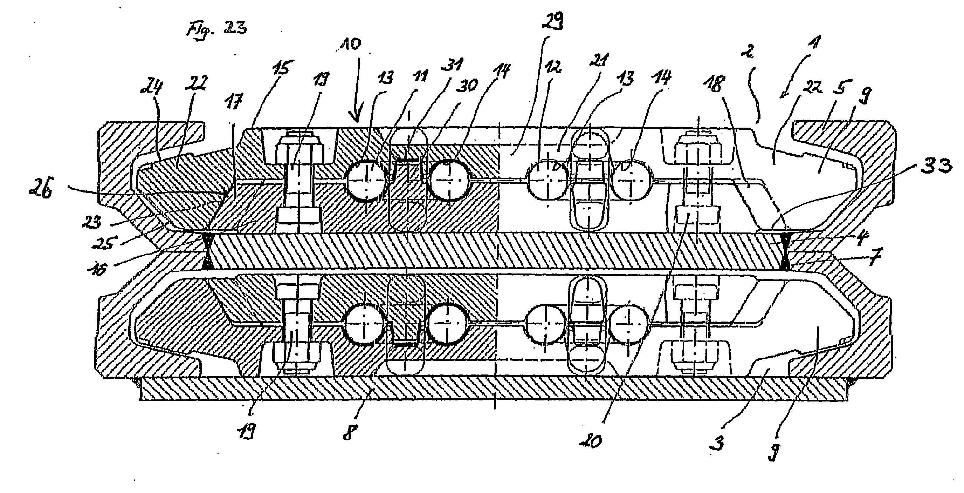

Fig. 23 zeigt einen Teilschnitt durch einen Kettenkratzförderer, wie er vornehmlich für den Untertagebetrieb zum Transport von stückigen Gegenständen und dergleichen verwendet wird. Ein solcher allgemein mit 1 bezeichneter Kettenkratzförderer weist ein Obertrum 2 und ein Untertrum 3 auf. Zur Trennung beider Trume dient ein Bodenblech 4, welches beidseitig mit dem oberen und unteren seitlichen Führungsprofilen 5und 6 des Rinnenförderers bei 7 unter Bildung der dargestellten Schweißnähte verschweißt ist. Die Führungsprofile 5 und 6 sind hierbei als Rinnenprofile ausgeführt. Das Untertrum 3 ist mit einem Abdeckblech 8 verschlossen, welches wiederum gemäß Darstellung mit den beiden seitlichen Führungsprofilen 5, 6 der Förderrinne verschweißt ist.

Ersichtlich bilden die Führungsprofile 5 und 6 innen ein umschließendes Rinnenprofil für die allgemein mit 9 bezeichneten Enden der unter sich gleich ausgebildeten Mitnehmer 10 des Kettenkratzförderers aus.

Die Mitnehmer 10 sind zur Verspannung mit einer Doppelmittelkette versehen, an der die Mitnehmer 10 mit gleichmäßigem Abstand zueinander angeordnet sind. Dementsprechend weisen die Mitnehmer für die beiden parallelen Mittelketten je ein Kettenbett 11, 12 auf. Die Kettenbetten sind unter sich gleich und dienen zum Verspannen jeweils eines horizontalen Kettengliedes einer Rundgliederkette. Zu diesem Zweck sind parallele Kettenkanäle 13 und 14 je Kettenbett 11, 12 vorgesehen. Die Rundungen der Kettenkanäle sind nach einem leicht abweichenden größeren Radius im Vergleich mit den Rundungen des Kettenstahls der horizontalen Kettenglieder ausgebildet.

Jeder der allgemein mit 10 bezeichneten Mitnehmer ist aus einem Oberteil 15 und einem Unterteil 16 gebildet, wozu jeder Mitnehmer längs einer horizontalen Ebene geteilt ist, die allerdings an den Enden aufgrund der speziellen Ausbildung des Oberteils nach unten und nach außen abgewinkelt ist. An den Teilflächen befinden sich außen formschlüssig ineinander greifende nasenartige Vorsprünge 17, 18, die in komplementäre Ausnehmungen 26 der Gegenfläche des Oberteils eingreifen und eine Zentrierung von Oberteil und Unterteil bewerkstelligen. Dabei ist es gleich, ob die Nasen am Oberteil oder am Unterteil und entsprechend die hiermit zusammenwirkenden komplementären Ausnehmungen 26 am Unterteil oder Oberteil ausgebildet sind. Infolge des Eingriffs der nasenartigen Vorsprünge mit den komplementären Ausnehmungen 26 ergibt sich eine gute Kraftübertragung und aufgrund der vergrößerten Kontaktfläche ein verringerter Verschleiß. Zudem verhindert der Eingriff eine Verschiebung von Oberteil und Unterteil des Mitnehmers unter Einwirkung von Kräften in Förderrichtung.

Zur Verspannung der horizontalen Kettenglieder in den Kettenbetten 11 und 12 sowie des Ober- und Unterteils 15 und 16 dienen Durchsteckschrauben 19, 20, wobei jede Durchsteckschraube außerhalb des Kettenbettes angeordnet ist und zwar im dargestellten Ausführungsbeispiel vornehmlich zwischen Kettenbett und entsprechendem Ende des Mitnehmers. Die Durchsteckschrauben, die mit entsprechenden Muttern verschraubt werden und die Schraubverbindungen für Ober- und Unterteil zur Bildung des Mitnehmers bilden, sind in allen Mitnehmern 10 vorzugsweise gleich ausgebildet.

Das Oberteil 15 eines jeden Mitnehmers 10 ist als bügelartiges Brückenglied ausgebildet und weist ein sich quer zur Förderrichtung erstreckendes stegartiges Mittelteil 21 in im wesentlichen ebener Ausrichtung auf, an dessen Enden sich nach unten vorstehende keilkopfartig ausgebildete Enden 22 anschließen, welche von oben das Unterteil 16, welches gleichfalls als im wesentlichen ebenes stegartiges Teil ausgebildet ist, übergreifen und zwischen sich klammerartig einkammern. Die Anlage zwischen Ober- und Unterteil erfolgt längs einer von oben nach unten schräg nach außen verlaufenden Schrägfläche 23, die an den vorspringenden Nasen ausgebildet sind. Entsprechende Schrägflächen sind natürlich auch an den komplementären Ausnehmungen 26 vorgesehen.

Die beiden Enden 22 des brückenartig ausgebildeten Oberteils 15 sind als Führungsglieder des Mitnehmers ausgebildet und weisen hierzu infolge keilkopfförmiger Ausbildung eine obere Führungsfläche 24 und eine untere Führungsfläche 25 auf, welche beide zueinander schräg verlaufen.

Zwischen den Kettenbetten 11 und 12 des Unterteils sind in der Ausführungsform nach Fig. 23 nasen- oder höckerartige Vorsprünge 30 vorgesehen, die jeweils in eine entsprechende Ausnehmung 32 des mittleren Stegs 29 des Oberteils eingreifen und als Zentriervorsprünge dienen. Dadurch wird die Verankerung von Oberteil und Unterteil im Verbund mit dem nasenartigen Eingriff an den Enden von Oberteil und Unterteil erhöht.

An den beiden Enden des Unterteils 16 kann eine Aussparung 33 vorgesehen sein, wodurch sich eine freigestellte Fläche an den beiden Enden des Unterteils 16 gegenüber dem aus Fig. 23 ersichtlichen Bodenblech 4 ergibt. Dadurch ergibt sich eine wirksame Überbrückung der bei 7 dargestellten Schweißnaht zwischen Bodenblech 4 und der seitlichen Führungsprofile 5, 6 des Rinnenförderers.

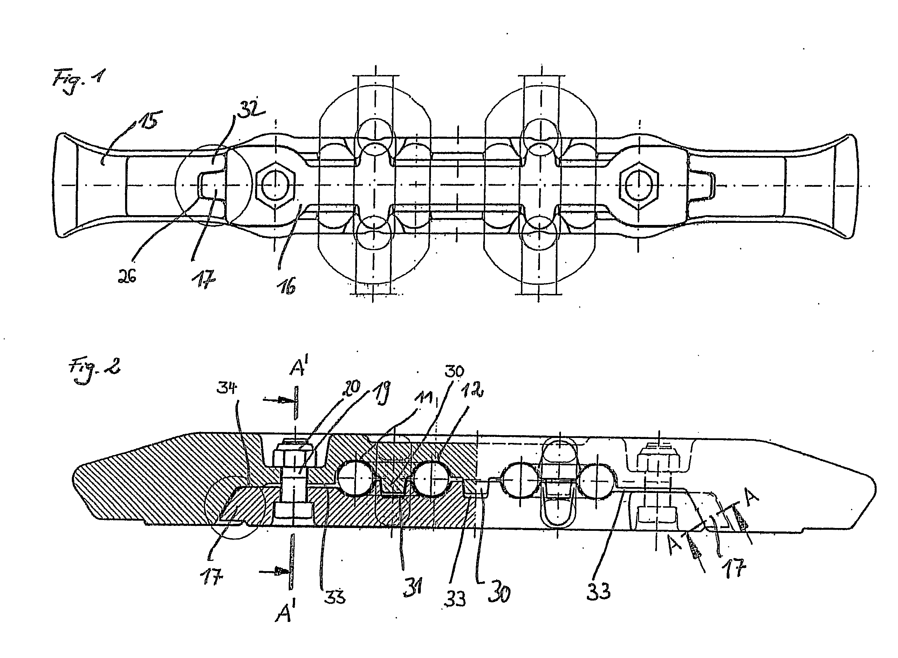

Bei der Ausfübrungsform nach Fig. 1 sind die nasenartigen Zentriervorsprünge 17 beidendig des Unterteils 16 ausgebildet und greifen in komplementäre Ausnehmungen 26 eines gabelartig ausgebildeten Innenabschnitts 32 des Unterteils 16 ein. Dadurch ergibt sich beidendig des Mitnehmers zwischen Oberteil und Unterteil ein entsprechender Zentriereingriff.

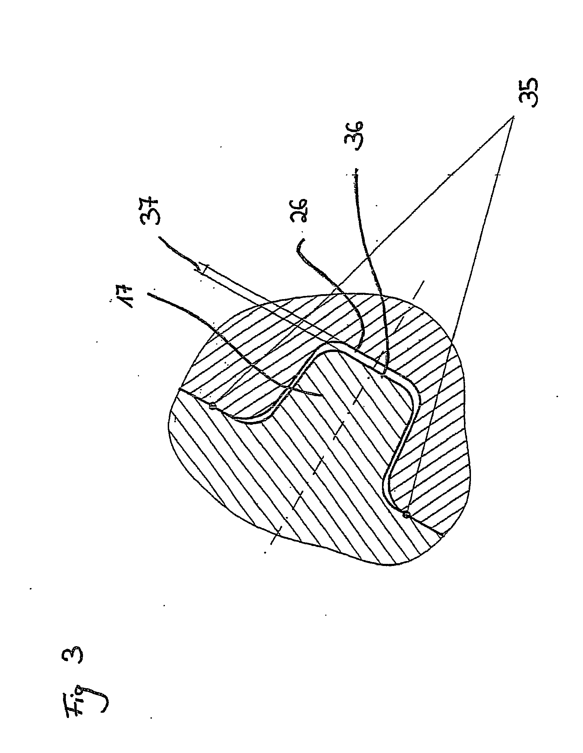

Ein weiterer Zentriereingriff ist durch das Zusammenwirken bzw. den Eingriff zwischen dem höckerartigen Vorsprung 30 und der Ausnehmung 31 gebildet, welche zwischen den Kettenbetten 11 und 12 vorgesehen sind. Im dargestellten Ausführungsbeispiel nach den Fig. 1 und 2 sind die Zentrierhöcker 30 am Oberteil, hingegen die Ausnehmungen 31 am Unterteil ausgebildet. Zudem ist zwischen den beiden zwischen den Kettenbetten 11 und 12 ausgebildeten Zentrierhöckern 30 ein mittig angeordneter weiterer Zentrierhöcker 30 vorgesehen, der wiederum am Oberteil angeordnet ist und in eine entsprechende Ausnehmung des Unterteils greift. Durch den Verbund dieser Zentriereingriffe ergibt sich ein stabiler Zusammenhalt der Mitnehmer, der durch die Schraubverbindungen 19, 20 gesichert ist.

Darüber hinaus ist zwischen Oberteil und Unterteil ein hier spaltförmig ausgebildeter Freiraum 32 vorgesehen, der sich im dargestellten Ausführungsbeispiel bis zur anderen Seite, also bis zur anderen Schraubverbindung 19, 20 fortsetzt und auch zeichnerisch im Bereich der Zentrierhöcker dokumentiert ist. Bei der Ausführungsform nach den Fig. 1 und 2 wird dieser Freiraum durch eine vorstehende Schulter 34 gebildet, die durch eine Einsenkung am Oberteil erzeugt ist. Diese Schultern 34 sind beidseitig des Mitnehmers vorgesehen und zwar im dargestellten Ausführungsbeispiel außerhalb der Schraubverbindungen 19, 20. Dadurch werden die gegenüberliegenden Flächen des Ober- und Unterteils vor allem im Bereich der beidendig vorgesehenen Schraubverbindungen freigestellt, ist dort also ein Spalt vorhanden. Insbesondere sind die Stützschultern 34 am Oberteil im Bereich des nasenartigen Eingriffs zwischen den Zentriernasen 17 und der Ausnehmung 23 ausgebildet. Dadurch ergibt sich ein definierter Freiraum 33 insbesondere im Bereich der Schraubverbindungen 19, 20. Beim Anziehen der Schrauben ergibt sich hierdurch eine positive Kraft und ein Verklemmen von Oberteil und Unterteil, wodurch eine einwandfreie Kraftübertragung zwischen Ober- und Unterteil erreicht wird und Deformationen des Mitnehmers auch unter hohen Lasten vermieden werden, die insbesondere im Verbund mit den Zentriereingriffen auch unter stärkeren Zwängungen und entsprechenden Kräften Verbiegungen von Oberteil und Unterteil verhindern. Derartige Kräfte werden insbesondere bei der Umlenkung des Kettenförderers um ein Kettenrad mit großem Durchmesser bei einem starken Herunterführen der Kette am Beginn des Einlaufs in das Führungsprofil des Rinnenförderers eingeleitet, was bei konventionellen Mitnehmern zu einer bogigen Auswölbung des Mitnehmers führen kann. Dies kann zu einem Absprengen des Oberteils nach Abscheren der Schraubverbindungen führen, aber auch zu Zwängungen innerhalb der seitlichen Führungsprofile. Diese Freistellung, insbesondere im Bereich der Schraubverbindungen die durch die im Oberteil ausgebildeten Schultern 34 gebildet ist, ist somit sehr wesentlich für eine stabile Ausbildung eines Mitnehmers, welche eine bogige Verformung von Unterteil und Oberteil und damit ein Absprengen des Oberteils verhindert.

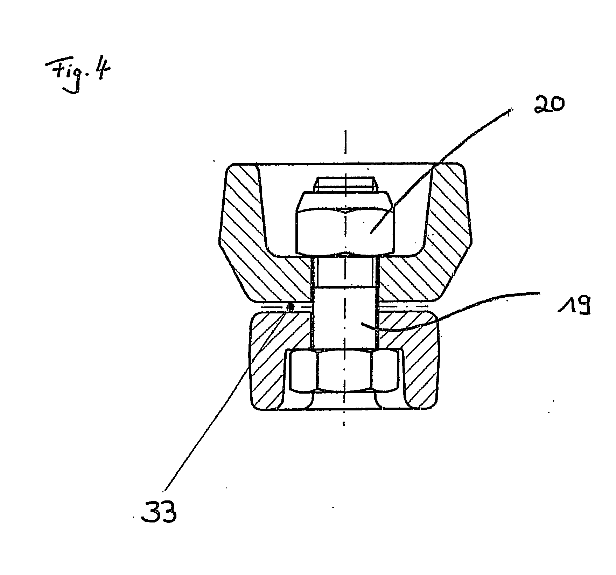

Wie insbesondere aus Fig. 3 recht deutlich wird, sind die Kontaktflächen des Zentriereingriffs zwischen Nase 17 und Ausnehmung 26 an die seitlichen Anlageflächen beidseits der mittig angeordneten Zentriernase 17 ausgebildet. Diese Kontaktflächen sind mit den Bezugszeichen 35 bezeichnet. Zweckmäßigerweise sind diese Kontaktflächen 35 entsprechend dem Schrägverlauf der vorderen Stirnfläche der Zentriernase 17 schräg von oben nach unten ausgebildet. Hierbei ist zwischen der Stirnfläche 36 der Zentriernase 17 und der Ausnehmung 26 ein Spiel 37 belassen.

Wie bereits oben dargelegt, kann auch eine umgekehrte Ausbildung erfolgen, d. h. die Zentriernase am Oberteil und der gabelförmige Abschnitt zur Ausbildung der Ausnehmung am Unterteil vorgesehen sein. Fig. 4 zeigt den infolge der Stützschultern 34 verbleibenden Klemmspalt 35, der insbesondere im Bereich der Schraubverbindung 19, 20 ausgebildet ist.

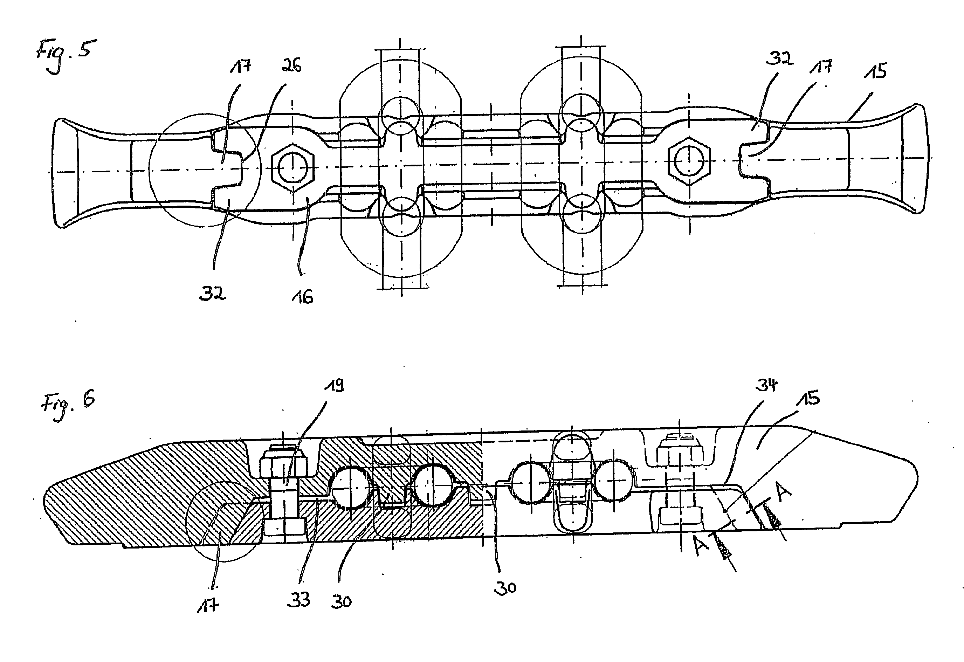

Die Ausführungsform nach den Fig. 5 und 6 ähnelt der zuvor beschriebenen Ausführungsform, jedoch sind die Zentriernasen 17 am Oberteil 15 und die komplementären, durch gabelartige Abschnitte 32 begrenzten Ausnehmungen 26 am Unterteil 16 vorgesehen.

In weiterer Abänderung ist der zentrierartige Eingriff zwischen Nase 17 und Ausnehmung 26 so ausgelegt, dass die Kontaktflächen 35 durch das Zusammenspiel von jeweils der Stirnfläche 36 der Nase 17 und der entsprechenden Fläche der Ausnehmung 26 gebildet ist. Auch diese Kontaktflächen sind entsprechend der schrägen Ausbildung der Stirnfläche der Nase 17 schräg ausgebildet. Selbstverständlich könnte auch hierzu alternativ die Auslegung so sein, dass die Kontaktflächen beidseits der Nase 17 wie im Ausführungsbeispiel nach den Fig. 1 und 2 vorgesehen sind. Die Schulter 34 ist hierbei im Bereich der gabelartigen Abschnitte 32 gebildet. Dadurch ergibt sich wieder die im Zusammenhang mit der Ausführungsform nach den Fig. 1 und 2 beschriebene Freifläche bzw. Freiraum 33.

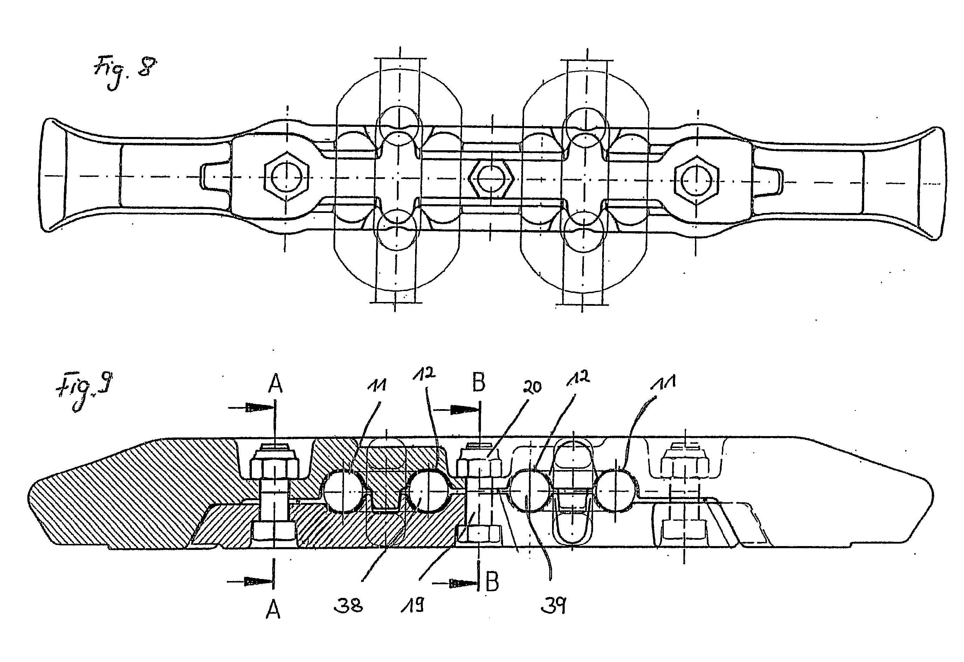

Die Ausführungsform nach den Fig. 8 und 9 entspricht weitgehend der Ausführungsform nach den Fig. 1 und 2, jedoch ist mittig zwischen den Kettenbetten 11 und 12, d. h. mittig zwischen den beiden Kettensträngen eine weitere Schraubverbindung 19, 20 und damit eine dritte Schraubverbindung zusätzlich zu den beiden außen angeordneten Schraubverbindungen vorgesehen.

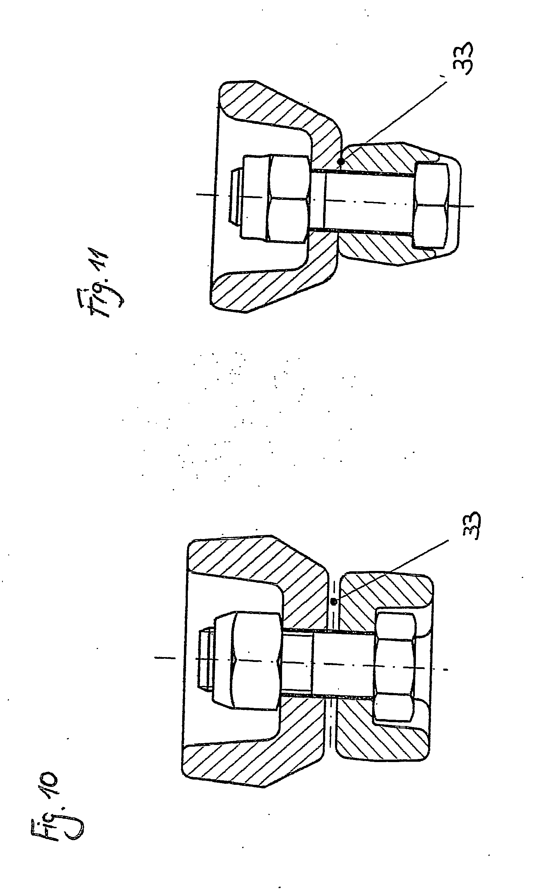

Wie sich aus den Fig. 10 und 11 ergibt, kann hierbei die mittig angeordnete Schraubverbindung 19, 20 so stark angezogen werden, dass der Klemmspalt aufgehoben wird, wodurch erreicht werden kann, dass die beiden innen liegenden horizontalen Schenkel 38 und 39 der beiden Ketten in Kontakt mit den beiden innen liegenden Kettenbetten 12 gelangen. Dadurch erfolgt eine teilweise Verspannung der horizontalen Schenkel der Kette zwischen Oberteil und Unterteil. Selbstverständlich kann aber eine Freistellung der horizontalen Kettenschenkel erfolgen, wenn die Schraubverbindung 19, 20 so angelegt ist, dass der Klemmspalt nicht beim Anziehen überbrückt wird.

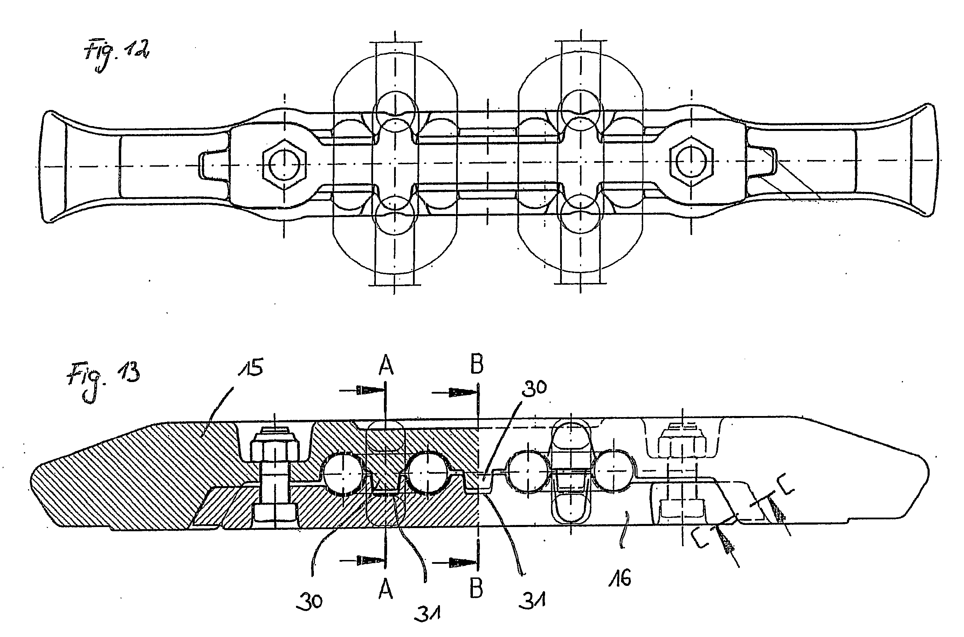

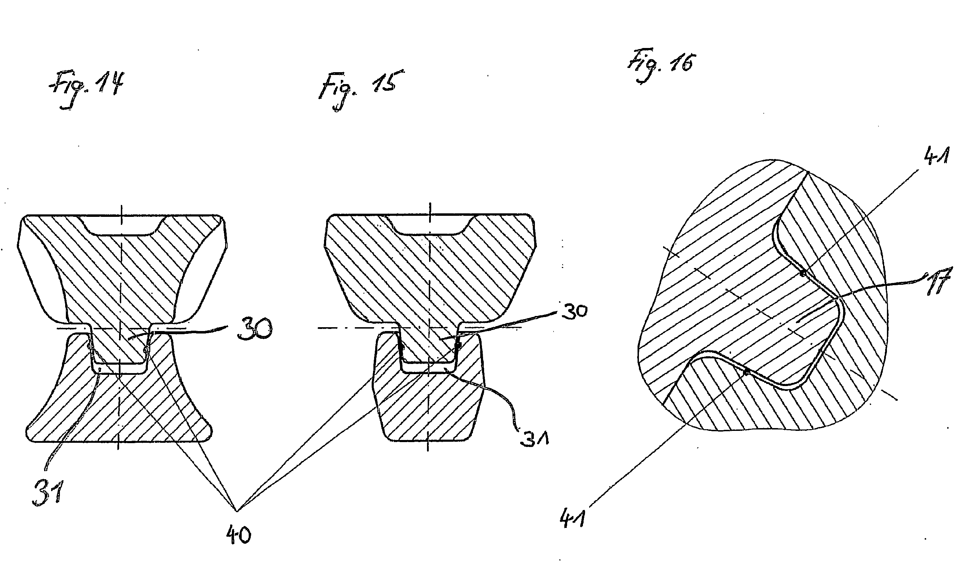

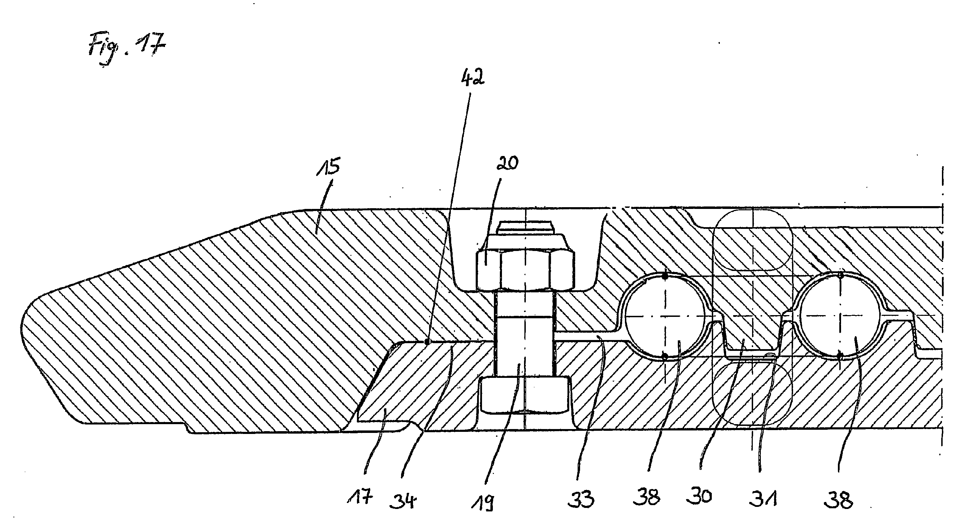

Die Ausführungsform nach den Fig. 12 und 13 ähnelt weitgehend der Ausfiihrungsform nach den Fig. 1 und 2. Wie jedoch die Fig. 14 und 15 zeigen, sind die Zentrierhöcker und die Zentrierausnehmungen 30 und 31 so ausgebildet, dass die Kontaktflächen seitlich liegen. Diese Kontaktflächen sind mit dem Bezugszeichen 40 bezeichnet.

Ebenso sind gemäß Fig. 16 im Bereich des nasenartigen Zentriereingriffs die seitlichen Flächen der Zentriernase 17, hier als Flächen 41 bezeichnet als die Kontaktflächen der Nut- und Federverbindung ausgelegt.

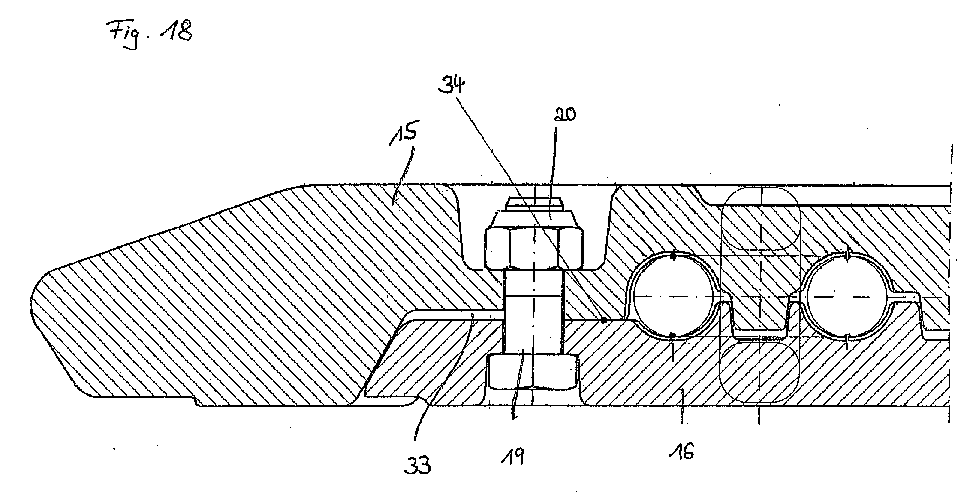

Fig. 17 zeigt eine weitere Ausführungsform, bei der die durch den schulterartigen Vorsprung 34 am Oberteil 15 ausgebildete Stützfläche 42 bis nahe an den Bereich der Schraubverbindung 19,20 vorgezogen ist, so dass sich innenseitig der mit 33 bezeichnete Freiraum als verwendbarer Klemmspalt ergibt. Auch der Zentrierhöcker 30 taucht mit einem verbleibenden Abstand bzw. Freiraum in die Ausnehmung 31 ein. Je nach Anziehen der Schraubverbindungen 19,20 kann somit eine Verspannung der beiden horizontalen Schenkel 38 der Kette erfolgen.

Bei der Ausführungsform nach Fig. 18 ist der schulterartige Vorsprung 34 im Bereich innerhalb der beidendig vorgesehenen Schraubverbindungen 19,20 vorgesehen und erstreckt sich wiederum bis nahe in den Bereich der Durchsteckschrauben 19. Der im Bereich außerhalb der beiden Durchsteckschrauben 19 befindliche spaltartige Freiraum ist mit 33 bezeichnet. Im übrigen ähnelt diese Ausführungsform der Ausführungsform nach Fig. 17.

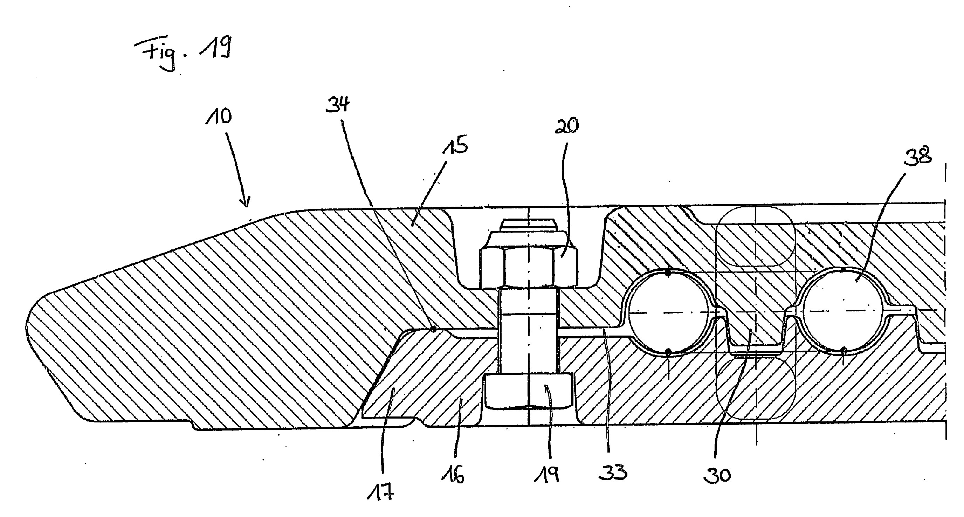

Bei der Ausführungsform nach Fig. 19 sind die beidendig vorgesehenen Vorsprünge 34, von denen aufgrund der nur hälftigen Darstellung des Mitnehmers 10 nur der linke Vorsprung 34 dargestellt ist, am Unterteil 16 ausgebildet und zwar im Bereich der Zentriernasen 17. Dadurch ergibt sich wiederum ein spaltartiger Freiraum 33, insbesondere im Bereich der Schraubverbindungen 19,20.

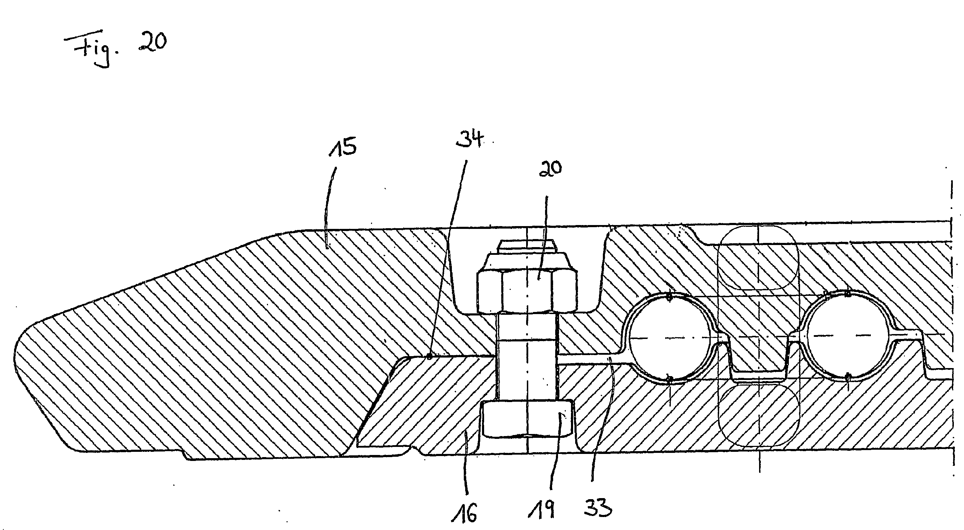

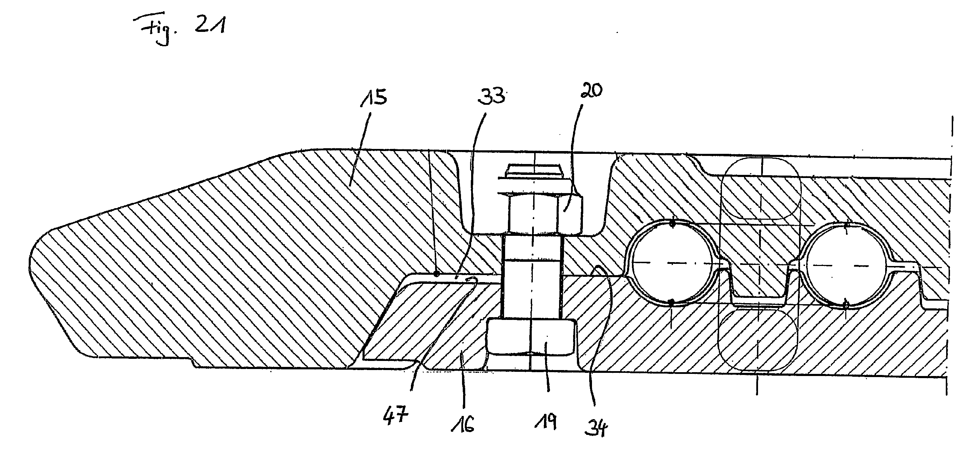

Bei der Ausführungsform nach Fig. 20 ist der Vorsprung 34 bis nahe an die Durchsteckschraube 19 herangezogen, so dass diese Ausführungsform im wesentlichen der Ausführungsform nach Fig. 17 ähnelt, wobei jedoch der schulterartige Vorsprung 34 am Unterteil 16 ausgebildet ist. Der Freiraum 33 ist im Bereich innerhalb der beiden Schraubverbindungen 19,20 ausgebildet. Bei der Ausführungsform nach Fig. 21 liegt wiederum der schulterartige Vorsprung 34 innerhalb des Bereichs zwischen den beiden Schraubverbindungen 19,20 und reicht bis nahe an die Durchsteckschraube 19.

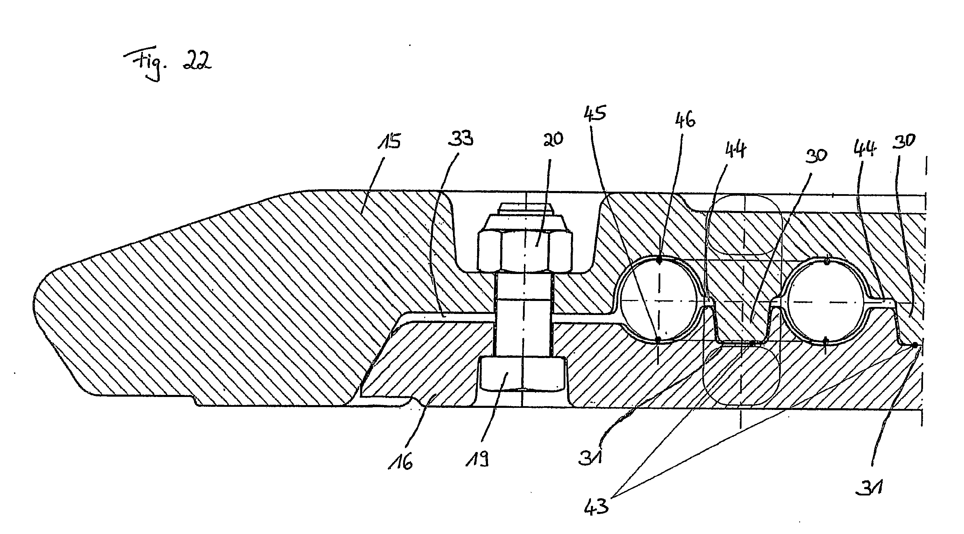

Bei der Ausführungsform nach Fig. 22 erfolgt die Ausbildung des Freiraums 33 im Bereich der Schraubverbindungen 19,20, wobei wiederum nur die linke Schraubverbindung aufgrund der hälftigen Darstellung des Mitnehmers gezeigt ist, durch eine erhöhte Ausbildung des zentrierartigen Höckers 30, der eine Kontaktfläche mit der Ausnehmung 31 bildet, die mit 43 bezeichnet ist. Entsprechend weit taucht auch der mittig angeordnete weitere Höcker 30 ein und bildet eine Stützfläche mit der benachbarten Bodenfläche der Ausnehmung 31. Der mittig angeordnete Zentrierhöcker 30 ist ebenso wie die Ausnehmung 31 nur hälftig dargestellt. Ein entsprechender Freiraum befindet sich auch im Bereich des Kettenbettes, wobei dieser Freiraum hier mit 44 bezeichnet wurde. Bei dieser Ausbildung kann je nach Anziehen der Schraubverbindungen 19,20 auch ein gewünschtes und auch gezieltes Verklemmen der Kettenschenkel erfolgen, wobei die Kontaktflächen mit 45 und 46 bezeichnet sind.

## Patentansprüche

1. Mitnehmer für Kettenkratzförderer, insbesondere des Untertagebetriebes, gebildet aus einem Oberteil (15) und einem damit durch Schraubverbindungen verschraubbaren Unterteil (16), dessen beide Teile je einen Teil eines oder mehrerer von einer flachen Teilungsebene durchsetzten Kettenbetts (11, 12) bzw. Kettenbetten (11, 12) sowie je einen Teil der für Schrauben (19) der Schraubverbindungen vorgesehenen und außerhalb des Kettenbettes (11, 12) angeordneten Ausnehmungen tragen, wobei Oberteil (15) und Unterteil (16) sich wenigstens teilweise umschließen und das Oberteil (15) als bügelartiges Brückenglied mit einem stegartigen Mittelteil (21) und an dessen Enden nach unten vorstehenden keilkopfartigen Enden (22) ausgebildet ist, welches das stegartige Unterteil beidendig mit den keilkopfartigen Enden von oben übergreift, die beiden keilkopfartigen Enden (22) des brückenartigen Oberteils (15) mit oberen und unteren zueinander keilförmig zulaufenden Führungsflächen (24, 25) ausgebildet sind und beidendig ein Eingriff zwischen Oberteil (15) und Unterteil (16) durch nasenartige Zentriervorsprünge (17) am Oberteil oder Unterteil erfolgt, die in entsprechende Ausnehmungen der Kontaktflächen des Unterteils (16) oder Oberteils (15) eingreifen,
**dadurch gekennzeichnet, dass**
zwischen Oberteil (15) und Unterteil (16) im Bereich zwischen den keilkopfartigen Enden am stegartigen Mittelteil (21) des Oberteils (15) und/oder am stegartigen Unterteil (16) Stützflächen (42) vorgesehen sind, die eine Freistellung zwischen Oberteil und Unterteil mindestens im Bereich der Schraubverbindungen (19, 20) bewerkstelligen.

2. Mitnehmer nach Anspruch 1, **dadurch gekennzeichnet, dass** die Stützflächen durch Vorsprünge (34) am Oberteil und/oder Unterteil gebildet sind, die einen vorzugsweise spaltartigen Freiraum (33) zwischen Oberteil und Unterteil mindestens im Bereich der Schraubverbindungen (19,20) bilden.

3. Mitnehmer nach Anspruch 1 oder 2, **dadurch gekennzeichnet, dass** die Vorsprünge (34) an den beiden seitlichen Endbereichen des Oberteils und Unterteils vorgesehen sind.

4. Mitnehmer nach einem der vorhergehenden Ansprüche, **dadurch gekennzeichnet, dass** sich der vorzugsweise spaltfreie Freiraum (33) über einen wesentlichen Bereich zwischen Oberteil und Unterteil erstreckt, vorzugsweise im wesentlichen über die gesamte Länge der Teilungsebene des Mitnehmers.

5. Mitnehmer nach einem der vorhergehenden Ansprüche, **dadurch gekennzeichnet, dass** die Vorsprünge (34) innerhalb der sich zwischen den an den beiden seitlichen Endbereichen vorgesehenen Schraubverbindungen (19,20) ausgebildet sind.

6. Mitnehmer nach einem der Ansprüche 1 bis 4, **dadurch gekennzeichnet, dass** die Vorsprünge im Bereich der Zentriemasen (17) vorgesehen sind.

7. Mitnehmer nach einem der vorhergehenden Ansprüche, **dadurch gekennzeichnet, dass** die Vorsprünge durch höckerartige Zentriervorsprünge (30) gebildet sind, die derart erhöht sind, dass bei Verspannen der Schraubverbindungen (19,20) die Höcker (30) an der Bodenfläche der komplementären Ausnehmung im Gegenteil anliegen und die beiden Kettenschenkel (38,39) freigestellt sind.

8. Mitnehmer nach einem der vorhergehenden Ansprüche, **dadurch gekennzeichnet, dass** mittig des Mitnehmers (10) ein zusätzlicher Zentrierhöcker (30) vorgesehen ist, der mit einer komplementären Ausnehmung (31) zusammenwirkt.

9. Mitnehmer nach einem der vorhergehenden Ansprüche, **dadurch gekennzeichnet, dass** die Eingriffsflächen bzw. Kontaktflächen zwischen Zentriernase (17) und Zentrierausnehmung (26) durch die Nasenstirnseite (35), die beiden seitlichen Nasenflächen (41) oder die die Ausnehmung (26) begrenzenden Seitenflächen (35) gebildet sind.

10. Mitnehmer nach einem der vorhergehenden Ansprüche, **dadurch gekennzeichnet, dass** die den Freiraum (33) bildenden Stützflächen durch eine Einsenkung (47) am Boden des Ober- und/oder Unterteils gebildet sind.

11. Mitnehmer nach einem der vorhergehenden Ansprüche, **dadurch gekennzeichnet, dass** das Kettenglied innerhalb des Kettenbettes (11,12) kraft- und formschlüssig gehalten ist, wobei in diesem Bereich, also in der Teilungsebene, das Oberteil und das Unterteil in einem geringen, eine Vorspannung beider Teile ermöglichenden Abstand zueinander angeordnet sind.

12. Mitnehmer nach einem der vorhergehenden Ansprüche, **dadurch gekennzeichnet, dass** auf der Unterseite des Unterteils (16) im Bereich der Enden Ausnehmungen (33) vorgesehen sind, die die beiden Unterteilenden gegenüber dem Bodenblech (4) des Förderers freistellen.

13. Mitnehmer nach Anspruch 12, **dadurch gekennzeichnet, dass** die freigestellte Fläche des Unterteils bündig mit der Unterseite der übergreifenden Enden (22) des Oberteils (15) verläuft.

## Claims

1. Flight for scraper chain conveyors, particularly for underground working, made up of a top part (15) and a bottom part (16) connectable to the top part by bolt connections, each of the two said parts carrying part of one or more chain bed(s) (11, 12) traversed by a level parting plane, and each carrying part of the recesses provided for bolts (19) of the bolt connections arranged outside the chain bed (11, 12), the top part (15) and bottom part (16) at least partly clasping one another and the top part (15) being configured as an arching bridge member with a web-like middle section (21) and downwards jutting wedge-like ends (22) at the ends thereof that overreaches the web-like bottom part at both ends from above by the wedge-like ends, the two wedge-like ends (22) of the bridging top part (15) being configured with upper and lower guide faces (24, 25) converging with each other to form a wedge shape, and engagement being made between top part (15) and bottom part (16) at both ends by neb-like locating projections (17) on the top part or bottom part that engage in corresponding recesses in the contact faces of the bottom part (16) or top part (15),
**characterized in that**
bearing faces (42) producing a clearance between top part (15) and bottom part (16) at least in the region of the bolt connections (19, 20) are provided between top part and bottom part in the region between the wedge-like ends on the web-like middle section (21) of the top part (15) and/or on the web-like bottom part (16).

2. Flight according to Claim 1, **characterized in that** the bearing faces are formed by projections (34) on the top part and/or bottom part that make a preferably gap-like clearance (33) between top part and bottom part at least in the region of the bolt connections (19, 20).

3. Flight according to Claim 1 or Claim 2, **characterized in that** the projections (34) are provided on both lateral end regions of the top part and bottom part.

4. Flight according to any one of the preceding claims, **characterized in that** the preferably gap-free [*sic*] clearance (33) extends over a substantial region between top part and bottom part, preferably substantially over the whole length of the parting plane of the flight.

5. Flight according to any one of the preceding claims, **characterized in that** the projections (34) are formed within the [... ? *The German text apparently omits words here* ― *Translator*] between the bolt connections (19, 20) provided in the two lateral end regions.

6. Flight according to any one of Claims 1 to 4, **characterized in that** the projections are provided in the region of the locating nebs (17).

7. Flight according to any one of the preceding claims, **characterized in that** the projections are formed by protuberant locating projections (30) whose height is such that when the bolt connections (19, 20) are tight, the protuberances (30) bear on the bottom face of the mating recess in the opposing part and both limbs (38, 39) of the chain are free.

8. Flight according to any one of the preceding claims, **characterized in that** an additional locating protuberance (30) cooperating with a mating recess (31) is provided at the centre of the flight (10).

9. Flight according to any one of the preceding claims, **characterized in that** the engagement faces or contact faces between locating neb (17) and locating recess (26) are formed by the end face (35) of the neb, the two lateral faces (41) of the neb, or the lateral faces (35) bounding the recess (26).

10. Flight according to any one of the preceding claims, **characterized in that** the bearing faces producing the clearance (33) are formed by a stepping-back (47) of the base of the top and/or bottom part.

11. Flight according to any one of the preceding claims, **characterized in that** the chain link is held positively and non-positively inside the chain bed (11, 12), the top part and bottom part being arranged with slight clearance from each other in this region, i.e. in the parting plane, allowing the two parts to be preloaded by tightening.

12. Flight according to any one of the preceding claims, **characterized in that** recesses (33) are provided on the underside of the bottom part (16) in the region of the ends, to keep both ends of the bottom part clear of the bottom plate (4) of the conveyor.

13. Flight according to Claim 12, **characterized in that** the recessed face of the bottom part extends flush with the underside of the overreaching ends (22) of the top part (15).

## Revendications

1. Entraîneur pour convoyeur à raclettes, en particulier pour l'exploitation souterraine, formé d'une partie supérieure (15) et d'une partie inférieure (16) pouvant être vissée à celle-ci par des raccordements à vis, dont les deux parties portent chacune une partie d'un ou plusieurs paliers de chaîne (11, 12) traversés par un plan de séparation plat ainsi qu'une partie des évidements prévus pour les vis (19) des raccordements à vis et disposés à l'extérieur du palier de chaîne (11, 12), dans lequel la partie supérieure (15) et la partie inférieure (16) se recouvrent au moins en partie, et la partie supérieure (15) est réalisée en tant qu'élément de pontage en forme d'étrier, comprenant un segment central en forme d'entretoise (21) et, à ses extrémités, des extrémités en forme de tête cunéiforme (22) faisant saillie vers le bas, lequel recouvre par le haut avec les deux extrémités en forme de tête cunéiforme (22) la partie inférieure en forme d'entretoise, les deux extrémités en forme de tête cunéiforme de la partie supérieure en forme de pont (15) sont réalisées avec des surfaces de guidage (24, 25) supérieure et inférieure s'étendant l'une par rapport à l'autre de manière cunéiforme et un contact entre la partie supérieure (15) et la partie inférieure (16) est obtenu aux deux extrémités au moyen de protubérances de centrage en forme de pattes (17) sur la partie supérieure ou la partie inférieure, qui s'engagent dans les évidements correspondants des surfaces de contact de la partie inférieure (16) ou de la partie supérieure (15),
**caractérisé en ce que**
des surfaces d'appui (42), qui permettent un détachement entre la partie supérieure et la partie inférieure au moins dans la zone des raccordements à vis (19, 20), sont prévues entre la partie supérieure (15) et la partie inférieure (16) dans la zone située entre les extrémités en forme de tête cunéiforme sur le segment central en forme d'entretoise (21) de la partie supérieure (15) et/ou sur la partie inférieure en forme d'entretoise (16).

2. Entraîneur selon la revendication 1, **caractérisé en ce que** les surfaces d'appui sont formées par des protubérances (34) sur la partie supérieure et/ou la partie inférieure, qui forment un espacement (33), de préférence en forme de fente, entre la partie supérieure et la partie inférieure au moins dans la zone des raccordements à vis (19, 20).

3. Entraîneur selon la revendication 1 ou 2,
**caractérisé en ce que** les protubérances (34) sont prévues sur les deux zones d'extrémité latérales de la partie supérieure et de la partie inférieure.

4. Entraîneur selon l'une quelconque des revendications précédentes, **caractérisé en ce que** l'espacement de préférence en forme de fente (33) s'étend sur une grande zone entre la partie supérieure et la partie inférieure, de préférence essentiellement sur toute la longueur du plan de séparation de l'entraîneur.

5. Entraîneur selon l'une quelconque des revendications précédentes, **caractérisé en ce que** les protubérances (34) sont formées à l'intérieur des raccordements à vis (19, 20) prévus entre les deux zones d'extrémité latérales.

6. Entraîneur selon l'une quelconque des revendications 1 à 4, **caractérisé en ce que** les protubérances sont prévues dans la zone des pattes de centrage (17).

7. Entraîneur selon l'une quelconque des revendications précédentes, **caractérisé en ce que** les protubérances sont formées par des protubérances de centrage analogues à une bosse (30) qui sont surélevées de telle sorte que, lors d'un serrage des raccordements à vis (19, 20), les bosses (30) viennent s'appuyer sur le fond de l'évidement complémentaire dans la partie opposée et les deux branches de chaînes (38, 39) sont dégagées.

8. Entraîneur selon l'une quelconque des revendications précédentes, **caractérisé en ce qu'**une bosse de centrage (30) supplémentaire, qui agit conjointement avec un évidement complémentaire (31), est prévue au centre de l'entraîneur (10).

9. Entraîneur selon l'une quelconque des revendications précédentes, **caractérisé en ce que** les surfaces d'engagement ou les surfaces de contact entre la patte de centrage (17) et l'évidement de centrage (26) sont formées par la face frontale de la patte (35), les deux surfaces latérales de la patte (41) ou les surfaces latérales (35) qui délimitent l'évidement (26).

10. Entraîneur selon l'une quelconque des revendications précédentes, **caractérisé en ce que** les surfaces d'appui formant l'espacement (33) sont formées par un décalage (47) situé sur la base de la partie supérieure et/ou inférieure.

11. Entraîneur selon l'une quelconque des revendications précédentes, **caractérisé en ce que** le maillon situé à l'intérieur du palier de chaîne (11, 12) est maintenu par enfoncement forcé et par emboîtement, dans lequel, dans cette zone, à savoir dans le plan de séparation, la partie supérieure et la partie inférieure sont disposées à une faible distance l'une de l'autre permettant une précontrainte des deux éléments.

12. Entraîneur selon l'une quelconque des revendications précédentes, **caractérisé en ce que** des évidements (33), qui dégagent les deux extrémités de la partie inférieure de la plaque de base (4) de l'entraîneur, sont prévus sur la face inférieure de la partie inférieure (16) dans la zone des extrémités.

13. Entraîneur selon la revendication 12, **caractérisé en ce que** la surface dégagée de la partie inférieure affleure avec la face inférieure des extrémités de recouvrement (22) de la partie supérieure (15).
